# EUROPEAN PATENT SPECIFICATION

(11) **EP 2 152 641 B1**
(45) Date of publication and mention of the grant of the patent: **28.12.2011**
(21) Application number: 08732813.4
(22) Date of filing: 26.03.2008
(51) Int. Cl.: C03C 12/02, E01F 9/04, C03C 3/12

(54) **PAVEMENT MARKING AND REFLECTIVE ELEMENTS HAVING MICROSPHERES COMPRISING LANTHANUM OXIDE AND ALUMINUM OXIDE WITH ZIRCONIA, TITANIA, OR MIXTURES THEREOF**
STRASSENMARKIERUNG UND REFLEKTIVE ELEMENTE MIT MIKROKUGELN, DIE LANTHANOXID UND ALUMINIUMOXID MIT ZIRCONIUMOXID, TITANOXID ODER MISCHUNGEN DAVON UMFASSEN
MARQUAGE POUR CHAUSSÉE ET ÉLÉMENTS RÉFLECTEURS AVEC MICROSPHÈRES COMPRENANT DE L'OXYDE DE LANTHANE ET DE L'OXYDE D'ALUMINIUM AVEC DE LA ZIRCONE, DU DIOXYDE DE TITANE, SEULS MÉLANGÉS

(30) Priority: 11.05.2007 US 747507
(43) Date of publication of application: 17.02.2010
(60) Divisional application: 11157834.0
(73) Proprietor: 3M Innovative Properties Company, Saint Paul, MN 55133-3427 (US)
(72) Inventor: MATHIS, Milt, D., Saint Paul, Minnesota 55133-3427 (US); FREY, Matthew, H., Saint Paul, Minnesota 55133-3427 (US); BUDD, Kenton, D., Saint Paul, Minnesota 55133-3427 (US); ENGEBRETSON, Joseph, D., Saint Paul, Minnesota 55133-3427 (US); FREDERICK, Billy, J., Jr., Saint Paul, Minnesota 55133-3427 (US)
(74) Representative: Vossius & Partner
(86) International application number: PCT/US2008/058178
(87) International publication number: WO 2008/140864

(56) References cited:
- WO-A-2005/047604
- US-A- 5 853 851
- US-A1- 2003 126 803
- US-A1- 2006 021 285
- US-B1- 6 245 700

## Description

Transparent glass and glass-ceramic microspheres (i.e., beads) are used as optical elements for retroreflective signage, apparel, and pavement markings.

Pavement markings including microspheres prepared from compositions that comprise lanthanum oxide are described for example in U.S. Patent No. 3,946,130 (Tung) WO 96133139, and US2003/0126803.

In one embodiment, the present invention relates to a method of marking a pavement surface, comprising providing a pavement surface and applying a pavement marking on the pavement surface wherein the pavement marking comprises transparent microspheres partially embedded in a binder, as described in claim 1.

In another embodiment, the present invention relates to a pavement marking tape comprising an adhesive coated surface and an opposing viewing surface wherein the viewing surface comprises transparent microspheres partially embedded in a binder, as described in claim 5.

In yet another embodiment, the present invention relates to, a (retro)reflective element comprising a core and transparent microspheres partially embedded in the core, as described in claim 7.

In each of these embodiments, the micropheres comprise certain LAZ, compositions. The microsphere composition is a LAZ base composition comprising 35 wt% to 70 wt% of one or more metal oxides selected from lanthanide series oxides and yttrium oxide; 15 wt% to less than 30 wt% Al₂O₃; and 5 to 35 wt% of one or more metal oxides selected from the group consisting of ZrO₂, HfO₂, ThO₂, and mixtures thereof.

In an aspect not within the present invention , the microsphere composition is a LAT or LATZ base compostion comprising 15 wt% to 65 wt% of one or more metal oxides selected from lanthanide series oxides and yttrium oxide; 15 wt% to 35 wt% Al₂O₃; 2 wt% to 20 wt% TiO₂; and 0 to 40 wt% of one or more metal oxides selected from the group consisting of ZrO₂, HfO₂, ThO₂, and mixtures thereof.

In each of these embodiments and aspects, the wt% of lanthanide series oxides, yttrium oxide, Al₂O₃, ZrO₂, HfO₂, ThO₂ totals at least 65 wt% of the total microsphere composition.
FIG. 1 is a cross-sectional view of an illustrative embodiment of a retroreflective element.
FIG. 2 is a perspective view of an illustrative pavement marking.
FIG. 3 is a cross-sectional view of an illustrative embodiment of a pavement marking tape.

Presently described are retroreflective articles, such as pavement markings, that comprise transparent microspheres partially embedded in a (e.g. polymeric) binder. Also described are (e.g. glass or glass-ceramic) microspheres, methods of making microspheres, as well as compositions of glass materials and compositions of glass-ceramic materials.

The microspheres comprise a lanthanide series oxide(s) (e.g. La₂O₃) or yttrium oxide, aluminum oxide (Al₂O₃), and one or more metal oxides selected from TiO₂, ZrO₂, HfO₂, and ThO₂. Base compositions with at least one lanthanide series oxide(s) (e.g. La₂O₃) or yttrium oxide, Al₂O₃, and one or more metal oxides selected from ZrO₂, HfO₂, and ThO₂ may be referred to herein as "LAZ". Base compositions not within the present invention with at least one lanthanide series oxide(s) or yttrium oxide, Al₂O₃, and TiO₂ may be referred to herein as "LAT". "LATZ" base compositions not within the present invention comprise at least one lanthanide series oxide or yttrium oxide, Al₂O₃, TiO₂, and one or more metal oxides selected from ZrO₂, HfO₂, and ThO₂.

The terms "beads" and "microspheres" are used interchangeably and refer to particles that are substantially spherical.

The term "solid" refers to beads that are not hollow, i.e., free of substantial cavities or voids. For use as lens elements, the beads are preferably spherical and non-porous. Solid beads are typically more durable than hollow beads. Solid beads can also focus light more effectively than hollow beads, leading to higher retroreflectivity.

The microspheres described herein are preferably transparent. The term "transparent" means that the beads when viewed under an optical microscope (e.g., at 100x) have the property of transmitting rays of visible light so that bodies beneath the beads, such as bodies of the same nature as the beads, can be clearly seen through the beads when both are immersed in oil of approximately the same refractive index as the beads. Although the oil should have an index of refraction approximating that of the beads, it should not be so close that the beads seem to disappear (as they would in the case of a perfect index match). The outline, periphery, or edges of bodies beneath the beads are clearly discernible.

The recitation of numerical ranges by endpoint includes all numbers subsumed within the range (e.g. the range 1 to 10 includes, for example, 1, 1.5, 3.33, and 10).

Beads described herein are particularly useful as lens elements in retroreflective articles. Transparent beads described herein typically have an index of refraction ranging from about 1.5 to about 2.0. The index of refraction is preferably at least 1.81, 1.82, 1.83, 1.84, 1.85, 1.86, 1.87, 1.88, or 1.89. Depending on the composition, the refractive index may be higher.

Articles of the invention share the common feature of comprising microspheres comprising certain LAZ compositions, described herein and/or a reflective element comprising such beads at least partially embedded in a core. At least a portion of the LAZ beads are exposed on the viewing surface of the pavement marking or reflective element article.

The pavement markings of the invention comprise a binder. In some aspects, the binder affixes the microspheres or the elements comprising microspheres to a pavement surface. Pavement surfaces are typically substantially solid and include a major portion of inorganic materials. Typically pavement surfaces include asphalt, concrete, and the like. The binder typically comprises a paint, a thermoplastic material, thermoset material, or other curable material. Common binder materials include polyacrylates, methacrylates, polyolefins, polyurethanes, polyepoxide resins, phenolic resins, and polyesters. For reflective pavement marking paints the binder may comprise reflective pigment.

For reflective sheeting that is suitable for reflective signage, apparel, or other uses, the binder that affixes the beads is typically transparent. Transparent binders are applied to a reflective base or may be applied to a release-coated support, from which after solidification of the binder, the beaded film is stripped and may subsequently be applied to a reflective base or be given a reflective coating or plating.

The LAT, LAZ, or LATZ microspheres and the reflective elements comprising such microspheres are typically coated with one or more surface treatments that alter the pavement marking binder wetting properties and/or improve the adhesion of the microspheres and reflective elements in the binder. The reflective elements are preferably embedded in the pavement marking binder to about 20-40%, and more preferably to about 30% of their diameters such that the reflective elements are adequately exposed. Surface treatments that control wetting include various fluorochemical derivatives such as commercially available from Du Pont, Wilmington, DE under the trade designation "Krytox 157 FS". Various silanes such as commercially available from OSI Specialties, Danbury, CT under the trade designation "Silquest A-1100" are suitable as adhesion promoters.

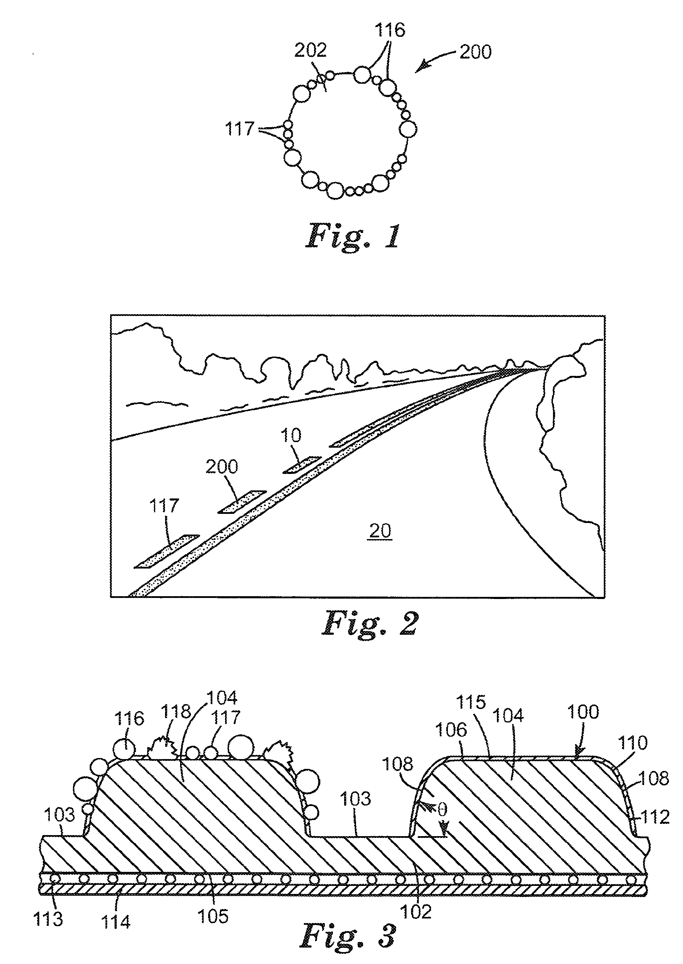

With reference to FIG. 1, retroreflective element 200 comprises LAT, LAZ, or LATZ microspheres 117 alone or in combination with bead 116 (e.g. having about the same or higher refractive index) partially embedded in the surface of a core 202. The core is typically substantially larger than the beads. For example, the average core diameter may range from about 0.2 to about 10 millimeters. The microspheres are preferably embedded in the core at a depth ranging form about 30% to 60% of the mircrosphere diameter.

The core may comprise an inorganic material. Glass-ceramics are useful as a core material. The crystalline phase acts to scatter light resulting in a semi-transparent or opaque appearance. Alternatively, the core may comprise an organic material such as a thermoplastic or bonded resin core, i.e. a crosslinked cured resin such as an epoxy, polyurethanes, alkyds, acrylics, polyesters, phenolics and the like. Various epoxies, polyurethane, and polyesters are generally described in U.S. Patent Nos. 3,254,563 (deVries, et al) and 3,418,896 (Rideout).. The core may be a composite comprising an inorganic or polymeric particle that is coated with an organic material. In the latter case, the organic material may serve as a binder to affix the beads to the outside surface of the core.

The retroreflective elements may be prepared from a non-diffusely reflecting bonded resin core in combination with specularly reflecting microspheres (e.g. vapor coating the microspheres with a thin layer of aluminum in the manner described in U.S. Patent No. 6,355,302.). This approach results in less durable retroreflective elements due to the use of metal which may be susceptible to chemical degradation. Less durable retroreflective elements would also result by incorporating metals (e.g. aluminum) into the core. In some embodiments, the retroreflective elements comprise at least one non-metallic light scattering material dispersed within the core. The coefficient of retroreflection R_{A} of the (e.g. dry) reflective elements for an entrance angle of -4° and a 0.2° obervation angle is typically at least about 5 (Cd/m²)/lux and preferably at least about 10 (cd/m²)/lux as measured according to Procedure B of ASTM Standard E809-94a.

Reflective elements may be made by known processes, such as described in U.S. Patent Nos. 5,917,652 (Mathers, et al.); 5,774,265 (Mathers, et al.), and 2005/0158461-A1 (Bescup et al.).

The LAT, LAZ, or LATZ beads and/or LAT, LAZ, or LATZ reflective elements are particularly useful in pavement marking. With reference to FIG. 2, the beads 117 and/or reflective elements 200 are sequentially or concurrently dropped or cascades onto a liquified binder 10 or compounded within a liquified binder that is provided on pavement surface 20. Suitable binders include wet paint, thermoset materials, or hot thermoplastic materials (e.g., U.S. Pat. Nos. 3,849,351; 3,891,451; 3,935,158; 2,043,414; 2,440,584; and 4,203,878). In these applications, the paint or thermoplastic material forms a matrix that serves to hold the microspheres and/or retroreflective elements in a partially embedded and partially protruding orientation. The matrix can also be formed from durable two component systems such as epoxies or polyurethanes, or from thermoplastic polyurethanes, alkyds, acrylics, polyesters, and the like.

Typically, the microspheres and/or reflective elements are applied to a roadway or other surface through the use of conventional delineation equipment. The microspheres and/or reflective elements are dropped from a random position or a prescribed pattern if desired onto the surface, and each retroreflective element comes to rest with one of its faces disposed in a downward direction such that it is embedded and adhered to the paint, thermoplastic material, etc. If different sizes are used, they are typically evenly distributed on the surface. When the paint or other film-forming material is fully cured, the microspheres and/or retroreflective elements are firmly held in position to provide an extremely effective retroreflective marker.

In other aspects, beads and/or reflective elements are employed in retroreflective sheeting including exposed lens, encapsulated lens, embedded lens, or enclosed lens sheeting. Representative pavement-marking sheet material (tapes) are described in U.S. Pat. No. 4,248,932 (Tung et al.), U.S. Pat. No. 4,988,555 (Hedblom); U.S. Pat. No. 5,227,221 (Hedblom); U.S. Pat. No. 5,777,791 (Hedblom); and U.S. Pat. No. 6,365,262 (Hedblom).

Pavement marking sheet material generally includes a backing, a layer of binder material, and a layer of beads partially embedded in the layer of binder material. The backing, which is typically of a thickness of less than about 3 millimeters, can be made from various materials, e.g., polymeric films, metal foils, and fiber-based sheets. Suitable polymeric materials include acrylonitrile-butadiene polymers, millable polyurethanes, and neoprene rubber. The backing can also include particulate fillers or skid resistant particles. The binder material can include various materials, e.g., vinyl polymers, polyurethanes, epoxides, and polyesters, optionally with colorants such as inorganic pigments, including specular pigments. The pavement marking sheeting can also include an adhesive, e.g., a pressure sensitive adhesive, a contact adhesive, or a hot melt adhesive, on the bottom of the backing sheet.

Pavement markings typically exhibit an initial coefficient of retroreflected luminance R_{L} according to ASTM E 1710-97 of at least 300 millicandelas/m²/lux, at least 500 millicandclas/m²/lux, at least 800 millicandelas/m²/lux, at least 1000 millicandelas/m²/lux, at least 2000 millicandelas/m²/lux, or at least 3000 millicandclas/m²/lux.

Patterned retoreflective (e.g. pavement) markings advantageously provide vertical surfaces, e.g., defined by protrusions, in which the microspheres are partially embedded. Because the light source usually strikes a pavement marker at high entrance angles, the vertical surfaces, containing embedded microspheres, provide for more effective retroreflection. Vertical surfaces also tend to keep the microspheres out of the water during rainy periods thereby improving retroreflective performance.

For example, FIG. 3 shows patterned pavement marker 100 containing a (e.g. resilient) polymeric base sheet 102 and a plurality of protrusions 104. For illustrative purposes, only one protrusion 104 has been covered with microspheres and antiskid particles. Base sheet 102 has front surface 103 from which the protrusions extend, and back surface 105. Base sheet 102 is typically about 1 millimeter (0.04 inch) thick, but may be of other dimension if desired. Optionally, marker 100 may further comprise scrim 113 and/or adhesive layer 114 on back surface 105. Protrusion 104 has top surface 106, side surfaces 108, and in an illustrative embodiment is about 2 millimeters (0.08 inch) high. Protrusions with other dimensions may be used if desired. As shown, side surfaces 108 meet top surface 106 at a rounded top portions 110. Side surfaces 108 preferably form an angle θ of about 70° at the intersection of front surface 103 with lower portion 112 of side surfaces 108. Protrusion 104 is coated with pigment-containing binder layer 115. Embedded in binder layer 115 are a plurality of high refractive index microspheres 117 and a plurality of a LAT, LAZ, or LATZ microspheres 116 (e.g. having a lower refractive index than the refractive index of 117). Optionally, antiskid particles 118 may be embedded on binder layer 115.

Pavement marking sheetings can be made by a variety of known processes. A representative example of such a process includes coating onto a backing sheet a mixture of resin, pigment, and solvent, dropping beads onto the wet surface of the backing, and curing the construction. A layer of adhesive can then be coated onto the bottom of the backing sheet. U.S. Pat. No. 4,988,541 (Hedblom) discloses a method of making patterned pavement markings and is incorporated herein by reference in its entirety. Optionally, a scrim (e.g., woven or nonwoven) and/or an adhesive layer can be attached to the back side of the polymeric base sheet, if desired.

In some embodiments, two types of microspheres are employed wherein one type are the LAT, LAZ, or LATZ beads described herein and the second type are "high index microspheres," having for example a refractive index greater than 2.0. In some aspects, one of the two types of microspheres will be larger. For instance, the LAT, LAZ, or LATZ microspheres may range in diameter from 175 to 250 micrometers in diameter while the high index microspheres are about 50 to 100 micrometers in diameter. In such case, the smaller high index microspheres may be disposed between the larger low index LAT, LAZ, LATZ microspheres. As a result, the high refractive index microspheres are protected against abrasion caused by repeated traffic wear. Typically, the larger microspheres will cover more than about 50 percent of the retroreflective portion of the pavement marking surface area.

The low index LAT, LAZ, or LATZ microspheres are typically present in an amount of at least 25 weight percent of the micropheres, and preferably from about 35 to about 85 weight percent of the total amount of microspheres used. The high refractive index microspheres can range from 15 to about 75 weight percent. These ranges provide a good balance between dry and wet retroreflectivity and provide good abrasion resistance. Generally, about 5% to about 50% of the viewing surface area of the pavement marking comprises the microspheres and/or reflective elements.

The microspheres are preferably placed selectively on the side and top surfaces of the protrusions while leaving the valleys between protrusions substantially clear so as to minimize the amount of microspheres used, thereby minimizing the manufacturing cost. The microspheres may be placed on any of the side surfaces as well as the top surface of the protrusions to achieve efficient retroreflection.

The binder layer of FIGS. 2 and 3 as well as the core of the retroreflective element depicted in FIG. 1 comprise a light-transmissive material so that light entering the retroreflective article is not absorbed but is instead retroreflected by way of scattering or reflection off of pigment particles in the light-transmissive material. Vinyls, acrylics, epoxies, and urethanes are examples of suitable mediums. Urethanes, such as are disclosed in U.S. Pat. No. 4,988,555 (Hedblom, et al.) are preferred binder mediums at least for pavement markings. The binder layer preferably covers selected portions of the protrusions so that the base sheet remains substantially free of the binder. For ease of coating, the medium will preferably be a liquid with a viscosity of less than 10,000 centipoise at coating temperatures.

The binder layer of FIGS. 2 and 3 as well as the core of FIG. 1 typically comprise at least one pigment such as a diffusely reflecting or specularly reflecting pigment.

Specular pigment particles are generally thin and plate-like and are part of the binder layer, the organic core (a core comprising essentially only an organic binder material) of an element, or an organic binder coating on an inorganic particle that together make up a composite core of an clement. Light striking the pigment particles is reflected at an angle equal but opposite to the angle at which it was incident. Suitable examples of specular pigments include pearlescent pigments, mica, and nacreous pigments. Typically, the amount of specular pigment present in the binder layer is less than 50 percent by weight. Preferably, the specular pigments comprise about 15 percent to 40 percent of the binder layer by weight, this range being the optimum amount of specular pigment needed for efficient retroreflection. Pearlescent pigment particles are often preferred because of the trueness in color.

In lieu of or in addition to combining transparent beads with a reflective (e.g. pigment containing) binder and/or element core, the beads may comprise a reflective (e.g. metallic) coating. Preferrably, the metallic coating is absent from the portion of the outside surface of the bead that oriented to receive the light that is to be retroreflected, and present on the portion of the outside surface of the bead that is oriented opposite to the direction from which light that is to be retroreflected is incident. For example, in FIG. 1, a metallic coating may be advantageously placed at the interface between bead 117 and core 202. In FIG. 3, a reflective layer may be advantageously placed at the interface between the bead 117 and the binder 115 such as shown in U.S. Patent No. 6,365,262. Metallic coatings may be placed on beads by physical vapor deposition means, such as evaporation or sputtering. Full coverage metallic coatings that are placed on beads can be partially removed by chemical etching.

The components of the beads are described as oxides, i.e. the form in which the components exist in the completely processed glass and glass-ceramic beads as well as retroreflective articles, and the form that correctly accounts for the chemical elements and the proportions thereof in the beads. The starting materials used to make the beads may include some chemical compound other than an oxide, such as a carbonate. Other starting materials become modified to the oxide form during the heating and or melting of the ingredients. It is appreciated that fugitive componenets that are volatilized during the heating, melting, and spheroidizing process are not present in the completely processed microspheres.

The compositions of beads, discussed in terms of a theoretical oxide basis, can be described by listing the components together with their weight percent (wt%) concentrations or their mole percent (mol-%) concentrations in the bead. Listing mol-% concentrations of components demands care to be explicit about the chemical formulae to which the mol% figures are being applied. For example, in certain circumstances, it is convenient to describe lanthanum oxide by the chemical formula La₂O₃; however, in other circumstances it is more convenient to describe lanthanum oxide by the chemical formula LaO_{3/2}. The latter notation is an example of an approach where the chemical formula for a metal oxide comprising a single metal is adjusted to yield a single metal atom per formula unit and whatever quantity of oxygen atoms (even if fractional) is required to reflect accurately the overall stoichiometry of the metal oxide. For compositions expressed herein in terms of concentrations given in units of mol-% of metal oxides, the mol% figures relate to such formula units that include a single, unitary metal atom.

Lanthanum is one of a group of 15 chemically related elements in group IIIB of the periodic table (lanthanide series). The names, symbols, and atomic numbers of the lanthanide series elements are as follows:

| Element | Symbol | Atomic No. |
|---|---|---|
| Lanthanum | La | 57 |
| Cerium | Ce | 58 |
| Praseodymium | Pr | 59 |
| Neodymium | Nd | 60 |
| Promethium | Pm | 61 |
| Samarium | Sm | 62 |
| Europium | Eu | 63 |
| Gadolinium | Gd | 64 |
| Terbium | Tb | 65 |
| Dysprosium | Dy | 66 |
| Holmium | Ho | 67 |
| Erbium | Er | 68 |
| Thulium | Tm | 69 |
| Ytterbium | Yb | 70 |
| Lutetium | Lu | 71 |

In some embodiments, the microspheres may comprise oxides of other lanthanide series elements in place of or in combination with lanthanum oxide. In some embodiments, lanthanum oxide, gadolinium oxide, and combinations thereof, represent at least 80 wt%, at least 85 wt%, at least 90 wt%, at least 95 wt%, and even 100% of the lanthanide series oxides.

In other embodiments, the microspheres may comprise yttrium oxide in place of or in combination with lanthanum oxide. Accordingly, the microspheres described herein may comprise various combinations of one or more oxides selected from oxides of the lanthanide series of elements and/or yttirum oxide. Any of ranges described herein with respect to lanthanum oxide content can be applied to a combination of lanthanide series oxides and yttrium oxide.

The microspheres described herein comprise at least one lanthanide series oxide(s) and/or yttrium oxide in an amount totaling at least 15 wt%. The amount of lanthanide series oxide or yttrium oxide may range up to 70 wt%. In some embodiments, the amount of lanthanide series oxide or yttrium oxide is less than 65wt%, 60wt%, 55wt-% or 50 wt%.

When the microspheres are LAZ micropheres and are substantially free of TiO₂, the concentration of lanthanide series oxide(s) and/or yttrium oxide can be at least 35 wt%, 36 wt%, 37 wt%, 38 wt%, 39 wt%, or 40 wt%. When the microspheres are LAT microspheres and are substantially free of ZrO₂, HfO₂, and ThO₂ (not within the present invention), the microspheres can comprise at least 40 wt%, 41 wt%, 42 wt%, 43 wt%, 44 wt%, or 45 wt% of lanthanide series oxide(s) and/or yttrium oxide.

The microspheres described herein also comprise aluminim oxide in an amount of at least 15 wt%, 16 wt%, 17 wt%, 18 wt%, 19 wt%, or 20 wt%. The amount of aluminim oxide may range up to 35 wt%.

The micropheres described also comprise one or more metal oxides selected from the group consisting of TiO₂, ZrO₂, HfO₂, ThO₂.

The LAT and LATZ microspheres (not within the present invention) comprise titania (i.e. TiO₂). Titania is a high index of refraction metal oxide with a melting point of 1840°C, and is typically used because of its optical and electrical properties, but not generally for hardness or strength. Similar to zirconia, titania is a strong nucleating agent known to cause crystallization of glass materials. Despite its high individual melting point, as a component in a mixture of certain oxides, titania can lower the liquidus temperature, while significantly raising the index of refraction of microspheres comprising such mixtures of oxides. Compositions comprising titania and optionally zirconia provide relatively lower liquidus temperatures and higher crystallinity when heat-treated appropriately, useful mechanical properties, and high transparency.

The concentration of TiO₂ in the LAT and LATZ microspheres is at least 2 wt%, 3 wt%, 4 wt% or 5 wt% and typically ranges up to about 20 wt%. In some embodiments, the amount of TiO₂ is at least 10 wt% or at least 15 wt%.

When relatively high concentrations of aluminum oxide are present, the amount of TiO₂ is greater than the amount of Al₂O₃ in excess of 30 wt%, i.e. wt% TiO₂ is greater than (wt% Al₂O₃ - 30 wt%). In various embodiments, the wt% of TiO₂ meets one or more of the equations set forth in the following table:

| **Microsphere Wt% TiO₂** |
|---|
| wt% TiO₂ > (wt% Al₂O₃ - 29 wt%) |
| wt% TiO₂ > (wt% Al₂O₃ - 28 wt%) |
| wt% TiO₂ > (wt% Al₂O₃ - 27 wt%) |
| wt% TiO₂ > (wt% Al₂O₃ - 26 wt%) |
| wt% TiO₂ > (wt% Al₂O₃ - 25 wt%) |
| wt% TiO₂ > (wt% Al₂O₃ - 24 wt%) |
| wt% TiO₂ > (wt% Al₂O₃ - 23 wt%) |
| wt% TiO₂ > (wt% Al₂O₃ - 22 wt%) |
| wt% TiO₂ > (wt% Al₂O₃ - 21 wt%) |
| wt% TiO₂ > (wt% Al₂O₃ - 20 wt%) |

In some embodiments, the microspheres are LAT micropheres and are substantially free of ZrO₂, HfO₂, and ThO₂. These embodiments generally comprise higher concentrations of the lanthanide series oxide(s) and/or yttrium oxide, as previously described. For LAT microspheres, the concentration of TiO₂ generally ranges from 5 wt% to 20 wt%. For the LATZ microspheres the amount of TiO₂ can range from 2 wt% to 20 wt%. When the (e.g. LATZ) further comprise alkaline earth oxides, the concentration of TiO₂ is typically no greater than 15 wt%, yet can range up to 20 wt%.

The LAZ and LATZ microsphere comprise zirconia. Generally, the zirconia contributes chemical and mechanical durability as well as contributes to the high index of refraction of the beads. As is commonly known, zirconia often includes some level of hafnia (HfO₂) contamination. Also, it is known that hafnia as well as thoria (ThO₂) can exhibit similar physical and chemical properties to those of zirconia. Accordingly, although beads are described in terms of their content of zirconia, it will be appreciated by one of ordinary skill in the art that hafnia and thoria can be substituted in part or in whole for zirconia.

The amount of zirconia alone or in combination with HfO₂, and/or ThO₂ may range from 0 to 40 wt%. The LAZ or LATZ micropheres comprise at least 1 wt%, 2 wt%, 3 wt%, 4 wt%, or 5 wt% of one or more metal oxides selected from ZrO, HfO₂, and ThO₂. In some embodiments, the (e.g. LATZ) microspheres comprise 15 wt% to 35 wt% of ZrO, HfO₂, ThO₂, and mixtures thereof.

The sum of the wt% of lanthanide series oxide or yttrium oxide, Al₂O, ZrO₂, HfO₂, and ThO₂, is generally at least 65 wt%, 66 wt%, 67 wt%, 68 wt%, 69 wt% or 70 wt% of the total microsphere composition.

In some embodiments, the composition of the microspheres consist essentially of LAT, LAZ, or LATZ. In other embodiments, the microspheres described herein may comprise 30 wt% to 35 wt% of other metal oxides. Such other metal oxides are selected as to not detract from the refractive index and/or acid resistance properties of the microspheres. Other metal oxides may be selected for addition with the purpose of lowering the melting point of the material, leading to easier processing. Suitable other metal oxides include for example LiO₂, Na₂O, K₂O; alkaline earth oxides such as BaO, SrO, MgO and CaO; as well as ZnO, SiO₂, and B₂O₃. Other metal oxides may be selected for addition with the purpose of improving the mechanical properties of the material. In some embodiments, the composition is substantially free (less than 1 wt%) of any other metal oxides. In other emboidments, the compositions comprises up to 20 wt% (e.g. 5 wt% to 15 wt%) of one or more alkaline earth oxides, particularly CaO and BaO.

Colorants can also be included in the beads of the present invention. Such colorants include, for example, CeO₂, Fe₂O₃, CoO, Cr₂O₃, NiO, CuO, MnO₂, V₂O₅ and the like. Typically, the beads include no more than about 5% by weight (e.g. 1%, 2%, 3%, 4%) colorant, based on the total weight of the beads (theoretical oxide basis). Also, rare earth elements, such as praseodymium, neodymium, europium, erbium, thulium, ytterbium may optionally be included for color or fluorescence. Preferably, the microspheres are substantially free of lead oxide (PbO) and cadmium oxide (CdO).

The microspheres described herein can be prepared from a melt process. Microspheres prepared from a melt process are described herein as "fused." For ease in manufacturing, the microsphere composition exhibits a relatively low liquidus temperature, such as less than about 1700°C, and preferably less than about 1600°C. Typically the liquidus temperature is less than about 1500°C. Generally, formulations including those at or near a eutectic composition(s) (e.g., binary or ternary eutectic compositions) will have lowest melting points in the system and, therefore, will be particularly useful.

Upon initial formation from a melt, beads are formed that are substantially amorphous yet can contain some crystallinity. The compositions preferably form clear, transparent glass microspheres when quenched. Upon further heat treatment, the beads can develop crystallinity in the form of a glass-ceramic structure, i.e., microstructure in which crystals have grown from within an initially amorphous structure, and thus become glass-ceramic beads. Upon heat treatment of quenched beads, the beads can develop crystallinity in the form of a nanoscale glass-ceramic structure, i.e., microstructure in which crystals less than about 100 nanometers in dimension have grown from within an initially amorphous structure, and thus become glass-ceramic beads. A nanoscale glass-ceramic microstructure is a microcrystalline glass-ceramic structure comprising nanoscale crystals. It is also within the scope to provide a transparent microspheres that are mostly crystalline (i.e., greater than 50 vol-% crystalline) directly after quenching, thus bypassing a heat-treatment step. It is believed that in such cases, employed cooling rates are not high enough to preserve an amorphous structure, but are high enough to form nanocrystalline microstructure.

"Glass microspheres" refers to microspheres having less than 1 volume % of crystals. Crystallinity is typically developed through heat-treatment of amorphous beads, although some glass-ceramic beads formed by quenching molten droplets may contain crystals without secondary heat treatment. The glass-ceramic microspheres comprise one or more crystalline phases, typically totaling at least 5 volume %. Glass-ceramic microspheres can comprise greater than 10 volume % crystals, greater than 25 volume % crystals, or greater than 50 volume % crystals.

Microspheres exhibiting X-ray diffraction consistent with the presence of a crystalline phase are considered glass-ceramic microspheres. An approximate guideline in the field is that materials comprising less than about 1 volume % crystals may not exhibit detectable crystallinity in typical powder X-ray diffraction measurements. Such materials are often considered "X-ray amorphous" or glass materials, rather than ceramic or glass-ceramic materials. Microspheres comprising crystals that are detectable by X-ray diffraction measurements, typically necessary to be present in an amount greater than or equal to 1 volume % for detectability, are considered glass-ceramic microspheres. X-ray diffraction data can be collected using a Philips Automated Vertical Diffractometer with Type 150 100 00 Wide Range Goniometer, sealed copper target X-ray source, proportional detector, variable receiving slits, 0.2° entrance slit, and graphite diffracted beam monochromator (Philips Electronics Instruments Company, Mahwah, New Jersey), with measurement settings of 45kV source voltage, 35mA source current, 0.04° step size, and 4 second dwell time.

For good transparency, it is preferable that the microspheres comprise little or no volume fraction of crystals greater than about 100 nanometers in dimension. When present, the microspheres comprise less than 20 volume % of crystals greater than about 100 nanometers in dimension, more preferably less than 10 volume %, and most preferably less than about 5 volume %. The size of the crystals in the crystalline phase is less than about 20 nanometers (0.02 micrometers) in their largest linear dimension. Crystals of this size typically do not scatter visible light effectively, and therefore do not decrease the transparency significantly.

Beads of the invention can be made and used in various sizes. It is uncommon to deliberately form beads smaller than 10 micrometers in diameter, though a fraction of beads down to 2 micrometers or 3 micrometers in diameter is sometimes formed as a by-product of manufacturing larger beads. Accordingly, the beads are preferably at least 20 micrometers, (e.g. at least 50 micrometers, at least 100 micrometers, at least 150 micrometers.) Generally, the uses for high index of refraction beads call for them to be less than about 2 millimeters in diameter, and most often less than about 1 millimeter in diameter (e.g. less than 750 micrometers, less than 500 micrometers, less than 300 micrometers).

Glass microspheres described herein can be prepared by fusion processes as disclosed, for example, in U.S. Patent No.3,493,403 (Tung et al). In one useful process, the starting materials are measured out in particulate form, each starting material being preferably about 0.01 micrometer to about 50 micrometer in size, and intimately mixed together. The starting raw materials include compounds that form oxides upon melting or heat treatment. These can include oxides, (e.g. titania, zirconia, and alkaline earth metal oxide(s)), hydroxides, acid chlorides, chlorides, nitrates, carboxylates, sulfates, alkoxides, and the like and the various combinations thereof. Moreover, multicomponent metal oxides such as lanthanum titanate (La₂TiO₅) and barium titanate (BaTiO₃) can also be used.

Glass microspheres can, alternatively, be prepared by other conventional processes as, for example, disclosed in U.S. Patent No.2,924,533 (McMullen, et al), and in U.S. Patent No. 3,499,745 (Plumat). The oxide mixture can be melted in a gas-fired or electrical furnace until all the starting materials are in liquid form. The liquid batch can be poured into a jet of high-velocity air. Beads of the desired size are formed directly in the resulting stream. The velocity of the air is adjusted in this method to cause a proportion of the beads formed to have the desired dimensions. Typically, such compositions have a sufficiently low viscosity and high surface tension. Typical sizes of beads prepared by this method range from several tenths of a millimeter to 3-4 millimeters.

Melting of the starting materials is typically achieved by heating at a temperature within a range of about 1500°C to about 1900°C, and often at a temperature, for example, of about 1700°C. A direct heating method using a hydrogen-oxygen burner or acetylene-oxygen burner, or an oven heating method using an arc image oven, solar oven, graphite oven or zirconia oven, can be used to melt the starting materials.

Alternatively, the melted starting material is quenched in water, dried, and crushed to form particles of a size desired for the final beads. The crushed particles can be screened to assure that they are in the proper range of sizes. The crushed particles can then be passed through a flame having a temperature sufficient to remelt and spheroidize the particles.

The starting materials can first be formed into larger feed particles. The feed particles are fed directly into a burner, such as a hydrogen-oxygen burner or an acetylene-oxygen burner or a methane-air burner, and then quenched in water (e.g., in the form of a water curtain or water bath). Feed particles may be formed by melting and grinding, agglomerating, or sintering the starting materials. Agglomerated particles of up to about 2000 micrometers in size (the length of the largest dimension) can be used, although particles of up to about 500 micrometers in size are preferred. The agglomerated particles can be made by a variety of well known methods, such as by mixing with water, spray drying, pelletizing, and the like. The starting material, particularly if in the form of agglomerates, can be classified for better control of the particle size of the resultant beads. Whether agglomerated or not, the starting material may be fed into the burner with the burner flame in a horizontal or vertical orientation. Typically, the feed particles are fed into the flame at its base.

The procedure for cooling the molten droplets can involve air cooling or rapid cooling. Rapid cooling is achieved by, for example, dropping the molten droplets of starting material into a cooling medium such as water or cooling oil. In addition, a method can be used in which the molten droplets are sprayed into a gas such as air or argon. The resultant quenched fused beads are typically sufficiently transparent for use as lens elements in retroreflective articles. For certain embodiments, they are also sufficiently hard, strong, and tough for direct use in retroreflective articles. A subsequent heat-treating step can improve their mechanical properties. Also, heat treatment and crystallization lead to increases in index of refraction.

When the quenched fused bead is subsequently heat treated, this heating step is carried out at a temperature below the melting point of the microsphere composition. Typically, this temperature is at least about 750°C. Preferably, it is about 800°C to about 1000°C, provided it does not exceed the melting point of the microsphere composition. If the heating temperature is too low, the effect of increasing the index of refraction will be insufficient. Conversely, if the heating temperature is too high, bead transparency can be diminished due to light scattering from large crystals. Although there are no particular limitations on the time of this heating step to increase index of refraction, develop crystallinity, and/or improve mechanical properties, heating for at least about 1 minute is normally sufficient, and heating should preferably be performed for about 5 minutes to about 100 minutes. In addition, preheating (e.g., for about 1 hour) at a temperature within the range of about 600°C to about 800°C before heat treatment may be advantageous because it can further increase the transparency and mechanical properties of the beads. Typically, and preferably, heat-treatment step is conducted in air or oxygen. These atmospheres are generally beneficial in improving color characteristic of beads, making them whiter. It is also within the scope to conduct heat-treatment in an atmosphere other than air or oxygen.

The latter method of preheating is also suitable for growing fine crystal phases in a uniformly dispersed state within an amorphous phase. A crystal phase containing oxides of zirconium, titanium, etc., can also form in compositions containing high levels of zirconia or titania upon forming the beads from the melt (i.e., without subsequent heating). Significantly, the crystal phases are more readily formed (either directly from the melt or upon subsequent heat treatment) by including high combined concentrations of titania and zirconia (e.g. combined concentration greater than 70%).

Microspheres made from a melt process are characterized as "fused." Fully vitreous fused microspheres comprise a dense, solid, atomistically homogeneous glass network from which nanocrystals can nucleate and grow during subsequent heat treatment.

The crush strength values of the beads of the invention can be determined according to the test procedure described in U.S. Pat. No. 4,772,511 (Wood). Using this procedure, the beads demonstrate a crush strength of preferably at least about 350 MPa, more preferably at least about 700 MPa.

The durability of the beads can be demonstrated by exposing them to a compressed air driven stream of sand according to the test procedure described in U.S. Pat. 4,758,469 (Lange). Using this procedure, the beads are resistant to fracture, chipping, and abrasion, as evidenced by retention of about 30% to about 60% of their original retroreflected brightness.

Acid resistance, as tested according to the method subsequently described in the examples, is also indicative of durability.

### Examples

The following provides an explanation of the present invention with reference to its examples and comparative examples. Furthermore, it should be understood that the present invention is no way limited to these examples. All percentages are in weight percents, based on the total weight of the compositions, unless otherwise specified.

### Test Methods

**1. Patch brightness** refers to the coefficient of retroreflection (R_{A}) determined using a retroluminometer. The device directs white light onto a planar monolayer of microspheres disposed on a white backing material at a fixed entrance angle to the normal to the monolayer. The white backing material comprises a transparent acrylic copolymer pressure sensitive adhesive having a refractive index in the range of 1.46 to 1.53 and about 17.2 wt% of TiO₂ pigment.. The coefficient of retroreflection is measured by a photodetector at a fixed divergence angle to the entrance angle (observation angle) in units of (Cd/m²)/lux. Data reported herein were measured at -4° entrance angle and 0.2° observation angle. Retroreflective brightness measurements were made for the purpose of comparison of brightness between beads of different composition.
**2. Index of refraction** of the microspheres was measured according to T. Yamaguchi, "Refractive Index Measurement of High Refractive Index Beads," Applied Optics Volume 14, Number 5, pages 1111-1115 (1975).
**3. Acid Resistance** of the microspheres was determined using a standard test. Exposure to liquid acid can etch the outside surface of some glass and glass-ceramic microspheres and cause formerly clear and apparently defect-free microspheres to become hazy in appearance when viewed using an optical microscope. Poor resistance to acid partially limits the utility of glass and glass-ceramic microspheres in pavement marking applications. For the test, 1.0 g of microspheres were immersed in 30 ml of a solution containing 1 vol % of concentrated sulfuric acid (i.e. 18 M) in water for 120 hours. The microspheres were examined using an optical microscope before and after acid immersion. Microspheres that exhibit very little or no decrease in the proportion of clear microspheres (e.g., < 5% decrease in content of clear microspheres) is considered to have passed the acid resistance test. Microspheres that exhibit a significant decrease in the proportion of clear microspheres (e.g., >5% decrease in clear microspheres) is considered to have failed the acid resistance test.

### 4. Retroreflection of Pavement Marking - Retroreflective Luminance (R_{L})

The coefficient of retroreflected luminance (R_{L}) of the pavement marking can be tested according to ASTM E 1710-05. One suitable device for measuring luminance is a model LTL-X retrometer manufactured by Delta Light and Optics, (Denmark).

### Starting Materials

The following starting materials were employed in the examples:
**zirconium oxide** - commercially available from Z-TECH division of Carpenter Engineering Products, Bow, New Hampshire, under the trade designation "CF-PLUS-HM",
**titanium oxide** - commercially available from KRONOS Incorporated, Cranbury, New Jersey, under the trade designation "KRONOS
**barium carbonate** - commercially available from Chemical Products Corporation, Cartersville, Georgia, under the trade designation Type S",
**lanthanum oxide** - commercially available from Treibacher, Industrie Inc., Toronto, Ontario, Canada, under the trade designation "Lanthanum Oxide La₂O₃, 99-9%",
**aluminum oxide -** commercially available from ALCOA Industrial Chemicals, Pittsburgh, PA, under the trade designation "16SG", and
**calcium carbonate** - commercially available from Akrochem Corporation (Akron, Ohio) under the trade designation "Hubercarb Q325."

### Microsophere Preparation

For each example, the gram amounts of each metal oxide as specified in Table 1 as follows were combined in a I quart porcelain jar mill with 3g of sodium carboxymethylcellulose (commercially available from the Aqualon Division of Hercules Incorporated, Hopewell, VA, under the trade designation "CMC 7L2C"), approximately 350g of water, and approximately 1600g of 1cm diameter zirconium oxide milling media.

The resulting slurry was milled for approximately 24 hours and then dried overnight at 90°C to 130°C to yield a mixed powder cake with the components homogeneously distributed. After grinding with a mortar and pestle, the dried and sized particles (<212microns diameter) were fed into the flame of a hydrogen/oxygen torch (commercially available from Bethlehem Apparatus Company, Hellertown, PA under the trade designation "Bethlehem Bench Burner PM2D Model-B"), referred to as "Bethlehem burner" hereinafter. The Bethlehem burner delivered hydrogen and oxygen at the following rates, standard liters per minute (SLPM):

| | Hydrogen | Oxygen |
|---|---|---|
| Inner ring | 8.0 | 3.0 |
| Outer ring | 23.0 | 9.8 |
| Total | 31.0 | 12.8 |

The particles were melted by the flame and transported to a water quenching vessel, yielding fused microspheres. The quenched particles were dried and then passed through the flame of the Bethlehem burner a second time, where they were melted again and transported to the water quenching vessel. A portion of the quenched microspheres was heat-treated by heating at 10°C/minute to 750°C, holding at 750°C for 1 hour, and furnace cooling.

Table 2 describes the theoretical bead composition for each example, accounting for decomposition of any carbonate that was present in the raw material batches. Table 2 also reports index of refraction values for quenched microspheres i) after flame-forming and ii) after furnace heat-treatment. Finally, Table 2 also reports the patch brightness values for as-flame-formed microspheres that were sieved to diameter less than 106 micrometers. Values of patch brightness for the sieved microspheres were approximately proportional the observed fraction of transparent microspheres present for each the samples, that ranged from approximately 1 percent to approximately 90 percent (i.e., greater fraction of transparent microspheres led to higher patch brightness values).

**Table 1**

| Example No. | La₂O₃ (g) | Al₂O₃ (g) | ZrO₂ (g) | TiO₂ (g) | CaCO₃ (g) | BaCO₃ (g) |
|---|---|---|---|---|---|---|
| 1 | 123.9 | 48.7 | 17.7 | 9.7 | | |
| 2 | 98.3 | 54.1 | 37.3 | 10.2 | | |
| 3 | 102.0 | 57.4 | 19.4 | 21.2 | | |
| 4 | 69.9 | 60.0 | 59.4 | 10.7 | | |
| 5 | 65.9 | 57.7 | 56.0 | 20.4 | | |
| 6 | 75.4 | 68.0 | 21.4 | 35.1 | | |
| 7 | 94.9 | 51.0 | 54.1 | | | |
| 8 | 119.8 | 46.0 | 34.2 | | | |
| 9 | 128.3 | 51.7 | | 20.0 | | |
| 10 | 106.1 | 61.1 | | 32.9 | | |
| 11 | 53.6 | 46.9 | 45.6 | 16.6 | | 37.4 |
| 12 | 56.2 | 49.2 | 47.8 | 17.4 | 9.9 | 19.6 |
| 13 | 59.0 | 51.7 | 50.2 | 18.3 | 20.9 | |
| 14 | 97.1 | 43.7 | 39.6 | | 19.7 | |

**Table 2**

| Example No. | La₂O₃ (wt%) | Al₂O₃ (wt%) | ZrO₂ (wt%) | TiO₂ (wt%) | CaO (wt%) | BaO (wt%) | Microsphere Index of Refraction after Flame-Forming | Patch Brightness after Flame- Forming | Microsphere Index of Refraction after Heat-Treatment |
|---|---|---|---|---|---|---|---|---|---|
| 1 | 62.0 | 24.4 | 8.8 | 4.8 | | | 1.90 | 15.4 | n/a |
| 2 | 49.2 | 27.1 | 18.6 | 5.1 | | | 1.91 | 15.4 | 1.91 |
| 3 | 51.0 | 28.7 | 9.7 | 10.6 | | | 1.91 | 15.8 | 1.94 |
| 4 | 35.0 | 30.0 | 29.7 | 5.3 | | | 1.89 | 13.2 | 1.89 |
| 5 | 33.0 | 28.8 | 28.0 | 10.2 | | | 1.95 | 18.4 | 1.95 |
| 6 | 37.7 | 34.0 | 10.7 | 17.6 | | | 1.91 | 10.6 | 1.93 |
| 7 | 47.5 | 25.5 | 27.0 | | | | 1.86 | 17.1 | 1.94 |
| 8 | 59.9 | 23.0 | 17.1 | | | | 1.91 | 17.2 | 1.91 |
| 9 | 64.2 | 25.8 | | 10.0 | | | 1.91 | 17.1 | 1.91 |
| 10 | 53.0 | 30.6 | | 16.4 | | | 1.90 | 13.4 | 1.91 |
| 11 | 27.9 | 24.5 | 23.8 | 8.7 | | 15.1 | 1.90 | 11.3 | 1.90 |
| 12 | 29.4 | 25.7 | 25.0 | 9.1 | 2.9 | 7.9 | 1.90 | 14.2 | 1.90 |
| 13 | 30.9 | 27.1 | 26.3 | 9.6 | 6.1 | | 1.90 | 15.1 | n/a |
| 14 | 50.7 | 22.8 | 20.7 | | 5.8 | | 1.88 | 16.7 | n/a |

### (Examples 4, 5, 6, and 9 to 13 are not within the claims)

The acid resistance test was performed on microspheres of Examples 1, 13, and 14. The contents of clear and defect-free microspheres before and after acid exposure for the examples were 80% and 15% for the microspheres of Example 1,97% and 95% for Example 12, and 90% and 90% for Example 14. Microspheres that pass the acid resistance test are preferred.

### Example 16 (not within the claims)

Microspheres having composition 17.2 wt% La₂O₃, 31.8 wt% Al₂O₃, 29.5 wt% ZrO₂, 10.7 wt% TiO₂, and 10.9 wt% CaO, were prepared by a flame forming method. The as-quenched microspheres exhibited an index of refraction value of 1.886 and a retroreflective patch brightness (R_{A}) value of about 13.5 (Cd/m²)/lux.

### Example 17 (not within the claims)

Microsphere having composition 17.9 wt% La₂O₃, 33.7 wt% Al₂O₃, 20.4 wt% ZrO₂, 16.7 wt% TiO₂, and 11.3 wt% CaO, were prepared by a flame forming method. The as-quenched microspheres exhibited an index of refraction value of 1.890 and a retroreflective patch brightness (R_{A}) value of 14-15 (Cd/m²)/lux.

### Example 18 (not within the claims)

Microspheres having composition 25.0 wt% La₂O₃, 30.2 wt% Al₂O₃, 23.8 wt% zrO₂, 10.4 wt% TiO₂, and 10.6 wt% CaO, were prepared by a flame forming method. The as-quenched microspheres exhibited an index of refraction value of 1.878 and a retroreflective patch brightness (Ra) value of 14.2 (Cd/m²)/lux.

The microspheres of Example 18 were surface treated first with "Silquest A-1100" adhesion promoting agent by first diluting approximately 8 wt% of "Silquest A-1100" with water such that the amount was sufficient to coat the beads and provide 600 ppm on the dried beads. The microspheres were then surface treated with "Krytox 157 FSL" floatation promoting agent in the same manner, to provide 150 ppm of such treatment. After each treatment, the microspheres were placed in an aluminum drying tray at a thickness of about 1.9 cm and dried in a 66°C oven for approximately 30 minutes.

### Example 19 (not within the claims)

A pavement marking tape having a TiO₂ pigmented polyurethane binder was prepared using the method described in U.S. Patent No. 4,988,555 (Hedblom). The resulting tape was the same as commercially available from 3M Company under the trade designation "3M Stamark High Performance Tape Series 380I" except that surface treated microspheres of Example 18 were used in place of the microspheres of the commercially available pavement marking tape. The resulting average retroreflective brightness, R_{L}, of the tape was 1,366 mCd/m²/lux.

### Example 20 (not within the claims)

A pavement marking tape having a pearlescent specularly reflecting pigmented polyurethane binder was prepared using the method described in U.S. Patent No. 5,777,791 (Hedblom). The resulting tape was the same as commercially available from 3M Company under the trade designation "3M Stamark High Performance Tape Series 380WR" except that surface treated microspheres of Example 18 were used in place of (i.e. both the wet and dry reflective) microspheres of the commercially available pavement marking tape. The resulting average retroreflective brightness, R_{L}, of the tape was 2,806 mCdlm²/lux.

### Example 21 (not within the claims)

Reflective elements (as depicted in Fig 1.) were prepared using the surface treated microspheres of Example 18 and the method described in U.S. Patent No. 2005/0158461-A1. A composite core was used comprising an inorganic sand particle coated with a specular, pearlescent pigmented urethane binder such as the bonded resin core precursor described on p. 7 of U.S. Publication No. 2005/0158461-A1. The elements were then applied at a 5g/lineal 30.5 cm (5 g/lineal ft) application rate onto a 10.2cm (4-inch) wide x 0.89mm (35 mil) acrylic latex emulsion, high-build paint as specified in U.S. Federal Standard TTP1952D. After drying/curing, the 0.89mm (35 mil) coating thickness of this particular liquified binder typically results in a 0.64mm (2.5mil) dry (caliper) thickness. The retroreflective brightness measurements, R_{L}, resulted in all readings exceeding the 3,400 mCd/m²/lux maximum limit of the instrument used.

A retroluminometer was retrofitted so as to project the beam at an 86.5 eg entrance angle to the marking. Measurements at 1.0 deg observation angle were made in a manner intended to approximate the geometry used to measure R_{L} values. The average retroreflective brightness reading measured in this way for Example 21 was 4,916 mCd/m²/lux.

## Claims

1. A method of marking a pavement surface comprising:
providing a pavement surface; and
applying a pavement marking on the pavement surface, wherein the pavement marking comprises transparent microspheres partially embedded in a binder and the microspheres comprise:
35 wt% to 70 wt% of one or more metal oxides selected from lanthanide series oxides and yttrium oxide;
15 wt% to less than 30 wt% Al₂O₃; and
5 to 35 wt% of one or more metal oxides selected from the group consisting of ZrO₂, HfO₂, ThO₂, and mixtures thereof;
wherein the wt% of lanthanide series oxides, yttrium oxide, Al₂O₃, ZrO₂, HfO₂, and ThO₂ of the composition of the microspheres totals at least 65 wt% of the total microsphere composition.

2. The method of claim 1 wherein the transparent microspheres have an index of refraction ranging from 1.81 to 1.89.

3. The method of claim 1 wherein the microspheres comprise up to 20 wt% of one or more alkaline earth oxides and the alkaline earth oxide is selected from CaO, BaO, and mixtures thereof.

4. The method of claim 1 wherein the pavement marking is a tape further comprising an adhesive and optionally a backing wherein the adhesive is bonded to the pavement surface.

5. A pavement marking tape comprising:
an adhesive coated surface and an opposing viewing surface wherein the viewing surface comprises transparent microspheres partially embedded in a binder and the microspheres comprise:
35 wt% to 70 wt% of one or more metal oxides selected from lanthanide series oxides and yttrium oxide;
15 wt% to less than 30 wt% Al₂O₃; and
5 to 35 wt% of one or more metal oxides selected from the group consisting of ZrO₂, HfO₂, ThO₂, and mixtures thereof;
wherein the wt% of lanthanide series oxides, yttrium oxide, Al₂O₃, ZrO₂, HfO₂, and ThO₂ of the composition of the microspheres totals at least 65 wt% of the total microsphere composition.

6. The pavement marking tape of claim 5 wherein the microspheres have an index of refraction of 1.81 to 1.89.

7. A reflective element comprising:
a core and transparent microspheres partially embedded in the core wherein the microspheres comprise:
35 wt% to 70 wt% of one or more metal oxides selected from lanthanide series oxides and yttrium oxide;
15 wt% to less than 30 wt% Al₂O₃; and
5 to 35 wt% of one or more metal oxides selected from the group consisting of ZrO₂, HfO₂, ThO₂, and mixtures thereof;
wherein the wt% of lanthanide series oxides, yttrium oxide, Al₂O₃, ZrO₂, HfO₂, and ThO₂ of the composition of the microspheres totals at least 65 wt% of the total microsphere composition.

## Patentansprüche

1. Verfahren zum Markieren eines Straßenbelags, umfassend:
das Bereitstellen eines Straßenbelags; und
das Aufbringen einer Straßenmarkierung auf den Straßenbelag, wobei die Straßenmarkierung durchsichtige Mikrosphären umfasst, die teilweise in einem Bindemittel eingebettet sind, und die Mikrosphären Folgendes umfassen:
35 Gew.-% bis 70 Gew.-% eines oder mehrerer Metalloxide, ausgewählt unter Oxiden der Lanthanidserie und Yttriumoxid;
15 Gew.-% bis weniger als 30 Gew.-% Al₂O₃; und
5 bis 35 Gew.-% eines oder mehrerer Metalloxide, ausgewählt aus der Gruppe bestehend aus ZrO₂, HfO₂, ThO₂ und Mischungen davon;
wobei der Prozentsatz an Oxiden der Lanthanidserie, Yttriumoxid, Al₂O₃, ZrO₂, HfO₂ und ThO₂ der Zusammensetzung der Mikrosphären insgesamt mindestens 65 Gew.-%, auf die gesamte Mikrosphärenzusammensetzung bezogen, beträgt.

2. Verfahren nach Anspruch 1, wobei die durchsichtigen Mikrosphären einen Brechungsindex im Bereich von 1,81 bis 1,89 aufweisen.

3. Verfahren nach Anspruch 1, wobei die Mikrosphären bis zu 20 Gew.-% eines oder mehrerer Erdalkalioxide umfassen und das Erdalkalioxid unter CaO, BaO und Mischungen davon ausgewählt ist.

4. Verfahren nach Anspruch 1, wobei die Straßenmarkierung ein Band ist, das des Weiteren einen Klebstoff und wahlweise einen Träger umfasst, wobei der Klebstoff auf den Straßenbelag geklebt wird.

5. Straßenmarkierungsband, umfassend:
eine klebstoffbeschichtete Oberfläche und eine entgegengesetzte Ansichtoberfläche, wobei die Ansichtoberfläche durchsichtige Mikrosphären umfasst, die teilweise in einem Bindemittel eingebettet sind, und die Mikrosphären Folgendes umfassen:
35 Gew.-% bis 70 Gew.-% eines oder mehrerer Metalloxide, ausgewählt unter Oxiden der Lanthanidserie und Yttriumoxid;
15 Gew.-% bis weniger als 30 Gew.-% Al₂O₃; und
5 bis 35 Gew.-% eines oder mehrerer Metalloxide, ausgewählt aus der Gruppe bestehend aus ZrO₂, HfO₂, ThO₂ und Mischungen davon;
wobei der Prozentsatz an Oxiden der Lanthanidserie, Yttriumoxid, Al₂O₃, ZrO₂, HfO₂ und ThO₂ der Zusammensetzung der Mikrosphären insgesamt mindestens 65 Gew.-%, auf die gesamte Mikrosphärenzusammensetzung bezogen, beträgt.

6. Straßenmarkierungsband nach Anspruch 5, wobei die Mikrosphären einen Brechungsindex von 1,81 bis 1,89 aufweisen.

7. Reflektives Element, umfassend:
einen Kern und durchsichtige Mikrosphären, die teilweise in dem Kern eingebettet sind, wobei die Mikrosphären Folgendes umfassen:
35 Gew.-% bis 70 Gew.-% eines oder mehrerer Metalloxide, ausgewählt unter Oxiden der Lanthanidserie und Yttriumoxid;
15 Gew.-% bis weniger als 30 Gew.-% Al₂O₃; und
5 bis 35 Gew.-% eines oder mehrerer Metalloxide, ausgewählt aus der Gruppe bestehend aus ZrO₂, HfO₂, ThO₂ und Mischungen davon;
wobei der Prozentsatz an Oxiden der Lanthanidserie, Yttriumoxid, Al₂O₃, ZrO₂, HfO₂ und ThO₂ der Zusammensetzung der Mikrosphären insgesamt mindestens 65 Gew.-%, auf die gesamte Mikrosphärenzusammensetzung bezogen, beträgt.

## Revendications

1. Procédé de marquage d'une surface de chaussée comprenant :
l'obtention d'une surface de chaussée ; et
l'application d'un marquage de chaussée sur la surface de chaussée, dans lequel le marquage de chaussée comprend des microsphères transparentes partiellement incorporées dans un liant, et les microsphères comprennent :
35 % en poids à 70 % en poids d'un ou plusieurs oxydes métalliques choisis parmi les oxydes de lanthanides et l'oxyde d'yttrium ;
15 % en poids à moins de 30 % en poids d'Al₂O₃ ; et
5 à 35 % en poids d'un ou plusieurs oxydes métalliques choisis dans le groupe constitué par ZrO₂, HfO₂, ThO₂ et les mélanges de ceux-ci ;
dans lequel le pourcentage pondéral des oxydes de lanthanides, de l'oxyde d'yttrium, d'Al₂O₃, de ZrO₂, de HfO₂ et de ThO₂ de la composition des microsphères s'élève à au moins 65 % en poids de la composition totale des microsphères.

2. Procédé selon la revendication 1 dans lequel les microsphères transparentes ont un indice de réfraction allant de 1,81 à 1,89.

3. Procédé selon la revendication 1 dans lequel les microsphères comprennent jusqu'à 20 % en poids d'un ou plusieurs oxydes alcalino-terreux et l'oxyde alcalino-terreux est choisi parmi CaO, BaO et les mélanges de ceux-ci.

4. Procédé selon la revendication 1 dans lequel le marquage de chaussée est un ruban comprenant en outre un adhésif et éventuellement un support, l'adhésif étant collé à la surface de chaussée.

5. Ruban de marquage de chaussée comprenant :
une surface recouverte d'un adhésif et une surface de visualisation opposée, dans lequel la surface de visualisation comprend des microsphères transparentes partiellement incorporées dans un liant, et les microsphères comprennent :
35 % en poids à 70 % en poids d'un ou plusieurs oxydes métalliques choisis parmi les oxydes de lanthanides et l'oxyde d'yttrium ;
15 % en poids à moins de 30 % en poids d'Al₂O₃ ; et
5 à 35 % en poids d'un ou plusieurs oxydes métalliques choisis dans le groupe constitué par ZrO₂, HfO₂, ThO₂ et les mélanges de ceux-ci ;
dans lequel le pourcentage pondéral des oxydes de lanthanides, de l'oxyde d'yttrium, d'Al₂O₃, de ZrO₂, de HfO₂ et de ThO₂ de la composition des microsphères s'élève à au moins 65 % en poids de la composition totale des microsphères.

6. Ruban de marquage de chaussée selon la revendication 5 dans lequel les microsphères ont un indice de réfraction de 1,81 à 1,89.

7. Elément réflecteur comprenant :
un coeur, et des microsphères transparentes partiellement incorporées dans le coeur, les microsphères comprenant :
35 % en poids à 70 % en poids d'un ou plusieurs oxydes métalliques choisis parmi les oxydes de lanthanides et l'oxyde d'yttrium ;
15 % en poids à moins de 30 % en poids d'Al₂O₃ ; et
5 à 35 % en poids d'un ou plusieurs oxydes métalliques choisis dans le groupe constitué par ZrO₂, HfO₂, ThO₂ et les mélanges de ceux-ci ;
dans lequel le pourcentage pondéral des oxydes de lanthanides, de l'oxyde d'yttrium, d'Al₂O₃, de ZrO₂, de HfO₂ et de ThO₂ de la composition des microsphères s'élève à au moins 65 % en poids de la composition totale des microsphères.
